# FASCICULE DE BREVET EUROPEEN

(11) **EP 0 458 709 B1**
(45) Date de publication et mention de la délivrance du brevet: **06.04.1994**
(21) Numéro de dépôt: 91420153.8
(22) Date de dépôt: 14.05.1991
(51) Int. Cl.: F16D 69/02, B22F 3/12

(54) **Procédé de fabrication d'une garniture de frein à plusieurs plots et garniture obtenue**
Verfahren zur Herstellung eines Bremsbelages mit mehreren Blöcken und so hergestellter Belag
Method of producing a multi-block brake lining and lining thus obtained

(30) Priorité: 18.05.1990 FR 9006601
(43) Date de publication de la demande: 27.11.1991
(73) Titulaire: LE CARBONE LORRAINE, 92400 Courbevoie (FR)
(72) Inventeur: Youssef, Hassab, F-95150 Taverny (FR); Bigay, Yves, F-78000 Versailles (FR)
(74) Mandataire: Séraphin, Léon

(56) Documents cités:
- EP-A- 0 144 464
- EP-A- 0 336 465

## Description

L'invention concerne un procédé de fabrication d'une garniture de frein à base de bronze ou de fer, comprenant plusieurs plots fixés sur un support métallique. Elle concerne aussi la garniture obtenue.

Les garnitures connues par les livraisons de la demanderesse comprennent des plots distincts fixés sur leur support métallique. Chaque plot comporte une enveloppe cylindrique de produit métallique fritté moins fragile, destiné à protéger le produit de friction en évitant ses ébréchures.

Du EP-A-0 336 465 il est également connu une garniture de frein comprenant plusieurs plots fixés sur un support métallique.

Les opérations de fabrication étant multiples, la fabrication plot par plot est compliquée et onéreuse. La fixation unitaire des plots est un inconvénient pour la maîtrise de la rigidité d'ensemble de la garniture. La demanderesse a cherché à mettre au point un procédé de fabrication plus simple et donnant une meilleure résistance en service des garnitures de freins obtenues.

### EXPOSE DE L'INVENTION

L'invention a pour premier objet un procédé de fabrication d'une garniture de freins dans lequel, comme il est connu, on fixe plusieurs plots en produits de friction frittés gainés chacun latéralement par un cordon fritté métallique moins fragile sur un support métallique généralement en tôle. Selon l'invention, on procède aux étapes suivantes :
(a) on revêt une face dudit support métallique d'une suspension de soudobrasure qu'on oxyde puis qu'on réduit, obtenant ainsi une surface d'accrochage ;
(b) on met en forme un ensemble de poudres de produits de friction bordé et divisé en plusieurs portions ébauches desdits plots par des cordons de poudres métalliques ébauches desdits cordons frittés moins fragiles ;
(c) on comprime ledit ensemble de poudres et on l'applique sur ladite surface d'accrochage dudit support métallique, obtenant ainsi un assemblage ;
(d) on lie les grains de poudres dudit ensemble entre eux et on les soude audit support métallique, par un traitement thermique dudit assemblage sous atmosphère réductrice ;
(e) on forge à plus de 400° C la pièce frittée et soudée obtenue, en réduisant la hauteur dudit ensemble d'au moins 15 % ;
(f) on effectue un rainurage desdits cordons partageant ledit ensemble en plots frittés distincts gainés latéralement sur tout leur pourtour par lesdits cordons, ledit rainurage laissant une garde d'au moins 0,5 mm par rapport audit support métallique pour régler la rigidité de la garniture de frein obtenue.

La combinaison des opérations (b) et (c) permet une simplification surprenante des opérations (d) et (e), la compression des poudres des plots étant faite en une seule fois et l'adhérence de la masse comprimée au support métallique traité permettant sa manipulation sans risque de glissement jusqu'aux moyens de traitement thermique réalisant le frittage des grains et leur soudage définitif au support. Le forgeage à chaud, produisant une densification des futurs plots, se fait ensuite en une seule opération, et le rainurage exécuté dans les cordons de poudres métalliques partageant l'ensemble des produits de friction laisse une garde de plus de 0,5 mm au-dessus du support métallique, et typiquement comprise entre 0,5 et 8 mm, de sorte que les plots ont une base commune dont l'épaisseur choisie conditionne la rigidité de la garniture de frein et de ses plots.

Le traitement de revêtement de soudobrasure de la face du support métallique est particulièrement important pour la tenue de l'ensemble de poudres dans les opérations de compression et thermiques : après des opérations classiques de dégraissage et/ou de sablage d'une face de ce support habituellement en acier, on le revêt, par exemple par pulvérisation au pistolet, d'une poudre de soudobrasure en suspension dans un liant organique tel que le collodion et dans un solvant organique tel que l'acétone :
- puis on oxyde complètement ces liants, typiquement entre 300° et 550° C, pour éliminer les traces de carbone ou suie qui gêneraient le frittage et la soudure ;
- puis on réduit les oxydes par traitement sous atmosphère réductrice entre 600° et 1000° C, typiquement 750 à 950° C, obtenant alors une liaison par diffusion des grains de poudre de soudobrasure à la semelle métallique.

La face ainsi traitée a une bonne adhérence et est prête au soudage aux grains des poudres de produits de friction et des poudres métalliques des cordons.

Cette bonne adhérence entraîne de la souplesse dans l'exécution des étapes (c) et (d) :
- on peut faire la mise en forme des poudres dans un moule séparé du support, les produits de friction étant cloisonnés par les produits métalliques des cordons grâce à des moyens de chargement compartimentés ;
- on peut alors faire la compression à part ou sur la tôle support. La compression sur la tôle support traitée est préférée, elle donne un accrochage meilleur, permettant de supporter sans glissement de l'ensemble comprimé des inclinaisons de la tôle de plus de 15° ;
- il est de beaucoup préféré de faire la mise en forme par compression des poudres directement sur la tôle support. Il est alors particulièrement intéressant d'ajouter à l'interface garniture-support une sous-couche de poudre de bronze donnant une épaisseur de 0,1 à 2 mm en fin de fabrication, soit typiquement à la mise en forme de 0,2 à 3 mm d'épaisseur, ce qui permettra d'améliorer la liaison soudée entre semelle et plots.

Le traitement thermique de frittage-soudage puis le forgeage à chaud sont effectués ensuite sur l'ensemble de poudres de produits de friction et de poudres métalliques ébauches des cordons de gainage moins fragiles des futurs plots, ils dépendent principalement de la nature de ces produits, base bronze ou bien base fer.

Dans le cas où les poudres de produit de friction contiennent des poudres de graphite et de produits abrasifs et des fondants tels que du plomb ou du verre, liés par du bronze, lesdites poudres métalliques ébauches des cordons moins fragiles contenant du bronze, de la fonte et 0,4 à 10 % de graphite, on effectue le traitement thermique de frittage et de soudage de l'étape (d) entre 750 et 1000° C pendant 15 à 40 min, et le forgeage à chaud de l'étape (e) à une température comprise entre 400 et 950° C.

Dans le cas où les poudres de produit de friction contiennent des poudres de graphite et de produits abrasifs et des fondants tels que du plomb et du verre, liés par du fer, lesdites poudres métalliques ébauches des cordons moins fragiles contenant du fer, de la fonte et 0,4 à 10 % de graphite, on effectue le traitement thermique de frittage et de soudage de l'étape (d) entre 850 et 1130° C, et le forgeage à chaud de l'étape (e) à une température comprise entre 600 et 1050° C.

Une amélioration considérable de la liaison entre les grains frittés et forgés est encore possible grâce à un traitement de compression isostatique effectué à au moins 750° C après le forgeage à chaud. Ce traitement multiplie la durée de vie des garnitures de freins de l'invention par 1,2 à 3. Sa réalisation pratique sera commentée dans les exemples.

L'invention a encore pour objet la garniture de frein correspondante, caractérisée en ce que ses plots de friction gainés par un cordon métallique moins fragile sont séparés par des intervalles laissant chacun une garde en surépaisseur d'au moins 0,5 mm par rapport à la semelle métallique.

Cette garniture a de préférence juste au-dessus de ladite semelle une sous-couche de bronze de faible épaisseur 0,1 à 2 mm, améliorant la solidité de la liaison soudée entre semelle et plots.

### AVANTAGES DE L'INVENTION

- La fabrication est fortement simplifiée, par la réalisation monobloc de la masse frittée, et par le convoyage et présentation de l'ébauche de garniture de frein en un seul assemblage au traitement thermique de frittage et de soudage.
- La rigidité, qui conditionne la performance en service, est réglée par le choix de la profondeur des rainures entre plots.
- La durée de vie en service est en outre augmentée, typiquement de 30 à 100 %, par l'ajout d'un traitement de compression isostatique à chaud.

### EXEMPLES

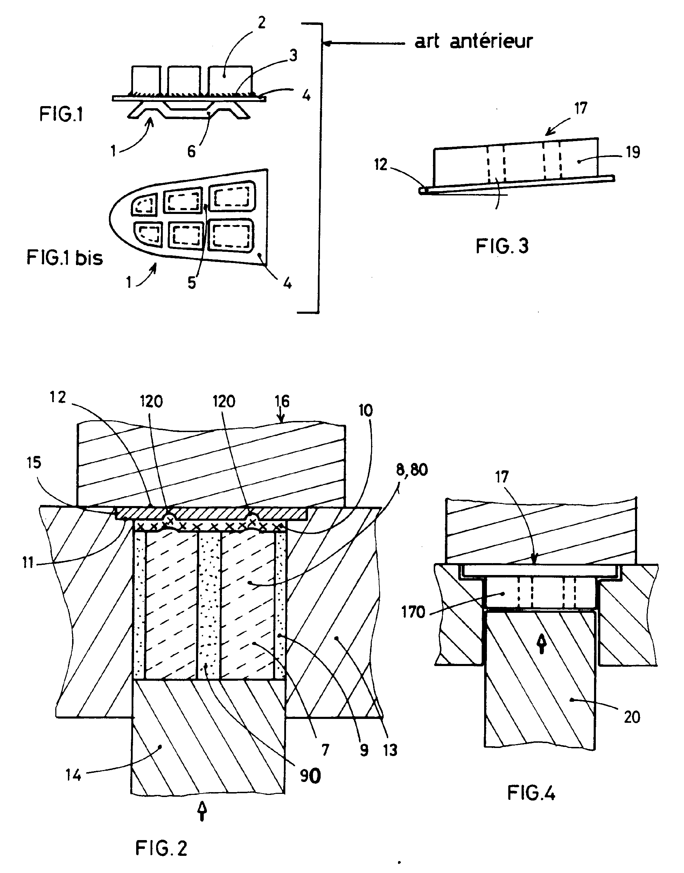

La figure 1 représente une garniture de frein de l'art antérieur, en élévation.

La figure 1 bis représente la même garniture en plan.

La figure 2 représente un dispositif et une opération de moulage et de compression d'un ensemble de poudres selon l'invention directement sur un support métallique, en coupe longitudinale d'un alignement d'ébauches de plots.

La figure 3 représente la pièce ébauche obtenue inclinée, en élévation.

La figure 4 représente un dispositif et une opération de forgeage à chaud de la pièce ébauche traitée thermiquement, les outillages étant seul coupés longitudinalement.

Les figures 5a à 5d schématisent l'effet des traitements successifs sur les liaisons entre les grains de poudres.

La figure 6 représente des pièces dans un conteneur de compression isostatique, en coupe partielle.

La figure 7 représente un exemple de garniture de frein selon l'invention.
1) La garniture 1 de l'art antérieur représentée sur les figures 1 et 1 bis comporte 6 plots 2 sensiblement quadrangulaires fixés par brasage 3 au support métallique 4, les intervalles 5 entre ces plots 2 résultant alors de leurs positionnements et fixations individuels. Le support 4 est lui-même fixé sur une pièce 6 de montage dans un dispositif de freinage.
2) Le dispositif de la figure 2 comprend une cavité 7 de mise en forme ou moulage d'un ensemble de poudres qui comprend, en dénomination abrégée, des "poudres de friction" 8 et des portions de "poudres de cordon" 9 et 90 entourant et divisant ces poudres de friction 8 en portions 80. Les portions de poudres intermédiaires 90 sont 2 à 3 fois plus larges que les portions externes 9, leur rainurage axial, par exemple par fraise-scie, en fin de fabrication laissera ainsi subsister un cordon. Cet ensemble de poudres 8, 9 et 90 est surmonté d'une sous-couche 10 de poudre de bronze d'épaisseur correspondant à une épaisseur finale de 0,5 mm, directement en contact avec la face revêtue de soudobrasure 11 d'un support métallique 12.
   La cavité 7 est délimitée par une matrice 13 et son bas est fermé par un poinçon inférieur 14. Le remplissage des poudres 8, 9, 10 a d'abord été effectué au moyen d'un sabot compartimenté, puis on a coiffé la cavité 7 du support 12 venant se placer dans un logement 15, puis d'un poinçon supérieur 16 qui maintient le support ou tôle 12, qui contient éventuellement des trous d'ancrage 120, et la matrice 13 lorsque le poinçon inférieur 14 remonte pour comprimer les poudres contre le support 12 et ses éventuels trous d'ancrage 120.
   Cette compression à froid produit à la fois le compactage des poudres et un bon accrochage sur la semelle ou support 12, permettant l'acheminement sans risque vers le traitement thermique de frittage et de soudage.
3) Sur la figure 3, on a figuré une ébauche 17 ainsi moulée et comprimée inclinée, cette inclinaison étant appréciée par l'angle 18 de sa semelle 12 avec l'horizontale. On a pu dans ce cas incliner l'ébauche à 20° sans déceler de glissement de l'ensemble de poudres comprimées 19 par rapport à son support 12. Ceci montre l'effet pratique du bon accrochage procuré par la face revêtue 11 de ce support 12, et indique une bonne aptitude vis-à-vis de la fabrication industrielle de telles garnitures.

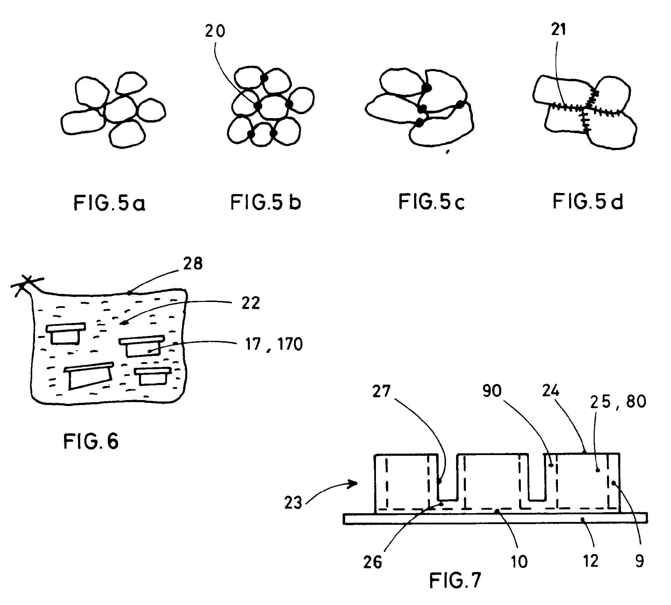

4) Sur la figure 4, on a représenté le forgeage à 800° C d'une ébauche 17 déjà frittée et soudée, dont les poudres de friction et de cordon sont à base de bronze - Par le forgeage du mélange fritté 170 au moyen d'un poinçon mobile 20, on réduit la hauteur de l'ensemble de poudres de 15 % à 35 %, ici de 25 %, pour densifier le mélange 170. Comme on va le voir, la compacité s'améliore et les grains s'imbriquent (figure 5 c), donnant une meilleure résistance en service.
5) On a représenté 4 stades de la fabrication sur les figures 5a à 5d :
   - figure 5a : grains de poudre après mise en forme ("moulage") ;
   - figure 5b : après frittage, liaisons métallurgiques 20 aux points de contact des grains ;
   - figure 5c : après forgeage à chaud, densification avec déformation des grains et des imbrications ;
   - figure 5d : après compression isostatique à chaud, cohésions et liaisons métallurgiques généralisées 21. Forte augmentation de la résistance mécanique et de la durée de vie en service.
6) Réalisation pratique de la compression isostatique à chaud :
   Les ébauches forgées 17 sont noyées dans un lit de particules réfractaires 22 placées dans un conteneur étanche déformable à chaud 28 fermé sous vide. Le conteneur 28 est ici en acier et, ainsi rempli, purgé d'air et fermé étanche, il est traité sous pression typique comprise entre 5 et 25 MPa et à température typique de 700° à 940° C dans le cas des "base bronze", de 850° à 1050° C dans le cas des "base fer, pendant au moins 10 minutes. Après refroidissement et extraction des ébauches 17, on obtient pour leur mélange fritté et forgé 170 maintenant comprimé isostatiquement des liaisons métallurgiques du type 21 (fig. 5d), l'amélioration correspondante de la résistance en service est surprenante.
7) Garniture de frein obtenue
   La garniture représentée 23 s'appliquera par les faces d'extrémité 24 de ses plots tels que 25 sur un disque de roue mobile d'un véhicule ferroviaire à freiner. Chaque plot 25 comprend sur tout son pourtour un cordon métallique 9,90 moins fragile gainant et protégeant son produit de friction 80.
   Les plots 25 sont solidaires entre eux par leur base 26 surmontant le support métallique 12 de 3 mm à l'endroit des intervalles ou rainures 27. Cette base 26 comporte une sous-couche 10 de bronze fritté d'épaisseur 0,5 mm située directement au-dessus de la tôle rigide 12 et assurant une soudure continue particulièrement résistante de la masse frittée 26 et 25 et de cette tôle 12.

### Applications industrielles

La garniture de frein de l'invention est utilisée pour le freinage de grande sécurité de véhicules ferroviaires ou automobiles, freinage agissant sur disques, flasques ou bandages de leurs roues. Elle est également utilisée pour les avions ou hélicoptères, et les machines industrielles.

## Revendications

1. Procédé de fabrication d'une garniture de frein (23) dans lequel on fixe plusieurs plots (25) en produits de friction frittés gainés chacun latéralement par un cordon fritté métallique moins fragile (9,90) sur un support métallique (12), caractérisé par les étapes suivantes :
(a) on revêt une face (11) dudit support métallique (12) d'une suspension de soudobrasure qu'on oxyde puis qu'on réduit, obtenant ainsi une surface d'accrochage (11) ;
(b) on met en forme un ensemble de poudres (8, 9 et 90) de produits de friction (8) bordé et divisé en plusieurs portions ébauches (80) desdits plots (25) par des cordons de poudres métalliques (9, et 90) ébauches desdits cordons frittés moins fragiles (9, et 90) ;
(c) on comprime ledit ensemble de poudres (8, 9 et 90) et on l'applique sur ladite surface d'accrochage (11) dudit support métallique (12), obtenant ainsi un assemblage (8, 9 et 90, et 12) ;
(d) on lie les grains de poudres dudit ensemble (8, 9 et 90) entre eux et on les soude audit support métallique (12), par un traitement thermique dudit assemblage (8, 9 et 90, et 12) sous atmosphère réductrice ;
(e) on forge à plus de 400° C la pièce frittée et soudée obtenue (17), en réduisant la hauteur de son ensemble de poudres frittées (170) d'au moins 15 % ;
(f) on effectue un rainurage desdits cordons (90) partageant ledit ensemble (170) en plots frittés distincts (25) gainés latéralement par lesdits cordons (9 et 90), ledit rainurage (27) laissant une garde (26) d'au moins 0,5 mm par rapport audit support métallique (12) pour régler la rigidité de la garniture de frein obtenue (23).

2. Procédé selon la revendication 1, dans lequel on exécute l'étape (a) comme suit :
- on dégraisse et/ou on sable ladite face (11) du support métallique (12) et on la revêt d'une poudre de soudobrasure en suspension dans un liant et un solvant organiques ;
- on effectue une oxydation complète desdits produits organiques, éliminant toute trace de carbone ;
- on réduit les oxydes et on lie les grains de soudobrasure au support (12) par traitement entre 750° et 950° C sous atmosphère réductrice.

3. Procédé selon la revendication 1, dans lequel, selon les étapes (b) et (c), on met en forme et on comprime ledit ensemble de poudres (8, 9 et 90) directement sur ledit support métallique (12), obtenant ainsi un accrochage amélioré.

4. Procédé selon la revendication 1, dans lequel selon les étapes (b) et (c) on met en forme ledit ensemble de poudres (8, 9 et 90) directement sur ladite surface d'accrochage (11) dudit support métallique (12) en mettant d'abord une sous-couche de poudre de bronze (10) correspondant à une épaisseur en fin de fabrication de 0,1 à 2 mm, puis on comprime ledit ensemble (8, 9 et 90 et 10) sur ledit support métallique (12).

5. Procédé selon la revendication 1, dans le cas où lesdites poudres de produits de friction (8) contiennent des poudres de graphite et de produits abrasifs et des fondants tels que du plomb ou du verre, liés par du bronze, lesdites poudres métalliques ébauches des cordons moins fragiles (9 et 90) contenant du bronze, de la fonte et 0,4 à 10 % de graphite.

6. Procédé selon la revendication 1, dans le cas où lesdites poudres de produits de friction (8) contiennent des poudres de graphite et de produits abrasifs et des fondants tels que du plomb et du verre, liés par du fer, lesdites poudres métalliques ébauches des cordons moins fragiles (9 et 90) contenant du fer, de la fonte et 0,4 à 10 % de graphite.

7. Procédé selon la revendication 5, dans lequel on effectue le traitement thermique de frittage et de soudage de l'étape (d) entre 750° et 1000° C pendant 15 à 40 min, et le forgeage à chaud de l'étape (e) à une température comprise entre 400 et 950° C.

8. Procédé selon la revendication 6, dans lequel on effectue le traitement thermique de frittage et de soudage de l'étape (d) entre 850° et 1130° C, et le forgeage à chaud de l'étape (e) à une température comprise entre 600 et 1050° C.

9. Procédé selon la revendication 1, dans lequel on effectue après le forgeage à chaud (e) une compression isostatique à au moins 750° C, sous lit de particules réfractaires (22) dans un conteneur étanche (28) fermé sous vide et déformable à chaud, par compression de ce conteneur (28).

10. Garniture de frein (23) comprenant plusieurs plots de friction (25) gainés latéralement chacun par un cordon fritté métallique (9 et 90) moins fragile et fixé sur un support métallique (12), obtenable par le procédé de l'une quelconque des revendications 1 à 9, caractérisée en ce que lesdits plots (25) sont séparés par des intervalles (27) laissant chacun une garde (26) de produits frittés métalliques en surépaisseur d'au moins 0,5 mm par rapport audit support métallique (12).

11. Garniture selon la revendication 10, dans laquelle lesdits plots (25) et lesdites gardes (26) comportent à leur base une couche (10) de bronze fritté d'épaisseur 0,1 à 2 mm.

## Claims

1. A method of manufacturing a brake lining (23) in which a plurality of blocks (25) of fritted friction products, each of which is encased laterally by a less fragile fritted metal band (9, 90), is fixed to a metal support (12), characterised by the following steps:
(a) one face (11) of said metal support (12) is coated with a solder-brazing suspension which is oxidised and then reduced so as to produce a bonding surface (11);
(b) an aggregate of powders (8, 9 and 90) is formed of friction products (8) which are bordered and divided into a number of portions (80), forming the rough shape of said blocks (25), by bands of metal powders (9 and 90) which are the rough shape of said less fragile fritted bands (9, and 90);
(c) said aggregate of powders (8, 9 and 90) is compressed and is applied to said bonding surface (11) of said metal support (12), thereby producing an assemblage (8, 9 and 90, and 12);
(d) the powder grains of said aggregate (8, 9 and 90) are bonded together and are soldered to said metal support (12) by subjecting said assemblage (8, 9 and 90, and 12) to a heat treatment in a reducing atmosphere;
(e) the fritted and soldered piece (17) obtained is forged at more than 400° C, reducing the height of the aggregate of fritted powders (170) by at least 15%;
(f) said bands (90) are provided with grooves, dividing said aggregate (170) into separate fritted blocks (25) which are encased laterally by said bands (9 and 90), said grooving operation (27) leaving a barrier (26) of at least 0.5 mm relative to said metal support (12) to control the rigidity of the brake lining obtained (23).

2. A method according to Claim 1, wherein step (a) is carried out in the following way:
- said face (11) of the metal support (12) is degreased and/or sanded, and it is coated with a solder-brazing powder in suspension in an organic binding agent and organic solvent;
- complete oxidation of said organic products is effected, removing all traces of carbon;
- the oxides are reduced, and the solder-brazing grains are bonded to the support (12) in a treatment between 750° and 950°C in a reducing atmosphere.

3. A method according to Claim 1, wherein in stages (b) and (c) said aggregate of powders (8, 9 and 90) is shaped and compressed directly on said metal support (12), thereby giving improved bonding.

4. A method according to Claim 1, wherein in stages (b) and (c) said aggregate of powders (8, 9 and 90) is shaped directly on said bonding surface (11) of said metal support (12) by first of all placing an underlying layer of bronzing powder (10), which has an end manufactured thickness of 0.1 to 2 mm, and then said aggregate (8, 9 and 90 and 10) is compressed upon said metal support (12).

5. A method according to Claim 1, wherein said friction product powders (8) contain graphite powders and abrasive products and fusing products such as lead or glass, bonded by the bronze, said metal powders forming the rough shape of the less fragile bands (9 and 90) containing bronze, cast iron and 0.4 to 10% graphite.

6. A method according to Claim 1, where said friction product powders (8) contain powders of graphite and abrasive products and fusing products such as lead and glass, bonded by iron, said metal powders forming the rough shape of the less fragile bands (9 and 20) containing iron, cast iron and 0.4 to 10% graphite.

7. A method according to Claim 5, wherein the fritting and soldering heat treatment of step (d) is carried out between 750°c and 1000°C for 15 to 40 mins, and the hot forging treatment of step (e) is carried out at a temperature of between 400 and 950°C.

8. A method according to Claim 6, wherein the fritting and soldering heat treatment of step (d) is carried out between 850° and 1130°, and the hot forging treatment of step (e) is carried out at a temperature of between 600 and 1050°C.

9. A method according to Claim 1, wherein after the hot forging treatment (e), isostatic compression takes place at 750°, at least, in a bed of refractory particles (22) in a sealed container (28) which is vacuum closed and heat deformable, by compression of this container (28).

10. A brake lining (23) comprising a plurality of friction blocks (25) which are each encased laterally by a metal fritted band (9 and 90) which is less fragile and which is fixed to a metal support (12) which can be obtained by way of the method of any one of Claims 1 to 9, characterised in that said blocks (25) are separated by gaps (27) which each allow a barrier (26) to exist of metal fritted products which is at least 0.5 mm greater in thickness than in relation to said metal support (12).

11. A lining according to Claim 10, wherein said blocks (25) and said barriers (26) have, at their base, a layer (10) of fritted bronze of 0.1 to 2 mm in thickness.

## Patentansprüche

1. Verfahren zur Herstellung eines Bremsbelages (23), bei welchem mehrere Blöcke (25) aus gesintertem Reibungsmaterial, die jeweils seitlich mit einem weniger spröden, gesinterten metallischen Mantel (9, 90) ummantelt sind, auf einem Metallträger (12) befestigt werden, gekennzeichnet durch folgende Schritte:
(a) Eine Fläche (11) des metallischen Trägers (12) wird mit einer Hartlotsuspension überzogen, die oxidiert und dann reduziert wird, wobei eine Haftfläche (11) erzielt wird;
(b) eine eingefaßte Einheit aus Pulvern (8, 9 und 90) aus Reibungsmaterialien (8), die durch Mantelbereiche aus Metallpulvern (9 und 90), die Rohlinge für die gesinterten Mäntel mit geringerer Sprödigkeit darstellen, in mehrere Rohlingsabschnitte (80) unterteilt sind, wird in eine Form gebracht;
(c) die Einheit aus Pulvern (8, 9 und 90) wird verpreßt und auf die Haftfläche (11) des metallischen Trägers (12) aufgebracht, um auf diese Weise ein vorgefügtes Teil (8, 9 und 90, und 12) herzustellen;
(d) durch thermische Behandlung des vorgefügten Teils (8, 9 und 80, und 12) unter einer reduzierenden Atmosphäre werden die Pulverkörner dieser Einheit werden miteinander verbunden und mit dem metallischen Träger (12) verlötet;
(e) das erhaltene gesinterte und verslötete Teil (17) wird über 400°C geschmiedet, wobei die Höhe der Einheit aus gesinterten Pulvern (170) um mindestens 15 % verringert wird;
(f) die Mantelbereicht (90) werden mit Nuten versehen, welche die Einheit (170) in einzelne, seitlich durch die Mäntel (9 und 90) ummantelte, gesinterte Blöcke unterteilen, wobei bei der Herstellung der Nuten (27) ein Nutenboden (26) von mindestens 0,5 mm zum Metallträger (12) stehengelassen wird, um die Steifigkeit des erhaltenen Bremsbelags (23) einzustellen.

2. Verfahren nach Anspruch 1, bei welchem der Schritt (a) wie folgt ausgeführt wird:
- Die Fläche (11) des metallischen Trägers (12) wird entfettet und/oder sandgestrahlt und mit einem Hartlotpulver in Suspension in einem Bindemittel und einem organischen Lösungsmittel überzogen;
- die organischen Stoffe werden vollständig oxidiert, so daß jede Spur von Kohlenstoff beseitigt wird;
- die Oxide werden reduziert, und die Körner des Hartlots werden durch Behandlung zwischen 750 und 950°C unter einer reduzierenden Atmosphäre mit dem Träger (12) verbunden.

3. Verfahren nach Anspruch 1, bei welchem die Einheit aus den Pulvern (8, 9 und 90) gemäß den Schritten (b) und (c) direkt auf dem metallischen Träger (12) ausgeformt und verpreßt wird, wodurch eine verbesserte Verankerung erzielt wird.

4. Verfahren nach Anspruch 1, bei welchem nach den Schritten (b) und c) direkt auf der Haftfläche (11) des metallischen Trägers (12) ausgeformt wird, wobei zuvor eine Zwischenschicht aus Bronzepulver (10) aufgetragen wird, die einer Dicke nach der Herstellung von 0,1 bis 2 mm entspricht, worauf die Einheit (8, 9 und 90 und 10) auf den metallischen Träger gepreßt wird.

5. Verfahren nach Anspruch 1, wobei die Pulver des Reibmaterials (8) Graphitpulver und Schleifmittel sowie Flußmittel wie Blei oder Glas enthalten, die mit Bronze gebunden sind, und wobei die Metallpulver als Rohlinge für die weniger spröden Mäntel (9 und 90) Bronze, Gußeisen und 0,4 bis 10 % Graphit enthalten.

6. Verfahren nach Anspruch 1, wobei die Pulver des Reibmaterials (8) Graphitpulver und Schleifmittel sowie Flußmittel wie Blei oder Glas enthalten, die mit Eisen gebunden sind, und wobei die Metallpulver als Rohlinge für die weniger spröden Mäntel (9 und 90) Eisen, Gußeisen und 0,4 bis 10 % Graphit enthalten.

7. Verfahren nach Anspruch 5, bei welchem die thermische Behandlung zum Sintern und Löten in Schritt (d) zwischen 750 und 1000°C während 15 bis 40 Minuten und das Warmschmieden von Schritt (e) bei einer Temperatur zwischen 400 und 950°C durchgeführt werden.

8. Verfahren nach Anspruch 6, bei welchem die thermische Behandlung zum Sintern und Löten in Schritt (d) zwischen 850 und 1130°C und das Warmschmieden von Schritt (e) bei einer Temperatur zwischen 600 und 1050°C durchgeführt werden.

9. Verfahren nach Anspruch 1, bei welchem nach dem Warmschmieden (e) ein isostatisches Pressen bei mindestens 750°C unter einem Bett von hitzebeständigen Partikeln (22) in einem dichten, unter Vakuum verschlossenen und warm verformbaren Behälter (25) durch Kompression dieses Behälters (28) durchgeführt wird.

10. Bremsbelag (23) mit mehreren Reibungsblöcken (25), die jeweils seitlich mit einem weniger sprödengesinterten, auf einem metallischen Träger (12) befestigten metallischen Mantel (9 und 90) ummantelt sind, der nach dem Verfahren nach einem der Ansprüche 1 bis 9 erhältlich ist, dadurch gekennzeichnet, daß die Blöcke (25) durch Zwischenräumen (27) voneinander getrennt sind, in denen jeweils eine mindestens 0,5 mm dicke Basis (26) aus gesinterten Metallmaterial auf dem metallischen Träger (12) stehengelassen ist.

11. Bremsbelag nach Anspruch 10, bei welchem unterhalb der Blöcke (25) und der Basen (26) eine mindestens 0,1 bis 2 mm dicke Schicht (10) aus gesinterter Bronze vorgesehen ist.
